Europäisches Patentamt

European Patent Office

Office européen des brevets

(11) Numéro de publication : **0 438 334 A1**

# (12) DEMANDE DE BREVET EUROPEEN

(21) Numéro de dépôt : 91400058.3

(22) Date de dépôt : 11.01.91

(51) Int. Cl.⁵ : **H02K 1/27, H02K 5/167, F04D 13/06, F04D 29/04**

(30) Priorité : 16.01.90 FR 9000434

(43) Date de publication de la demande :
24.07.91 Bulletin 91/30

(84) Etats contractants désignés :
AT BE CH DE ES FR GB IT LI LU NL SE

(71) Demandeur : SOCIETE ELECTROMECANIQUE
DU NIVERNAIS - SELNI
6, rue Louise-Michel
F-58000 Nevers (FR)

(72) Inventeur : Bourdelain, Laurent
THOMSON-CSF, SCPI, Cédex 67
F-92045 Paris la Défense (FR)
Inventeur : Cousin, Joel
THOMSON-CSF, SCPI, Cédex 67
F-92045 Paris la Défense (FR)

(74) Mandataire : Phan, Chi Quy et al
THOMSON-CSF SCPI
F-92045 PARIS LA DEFENSE CEDEX 67 (FR)

(54) **Procédé de réalisation d'une pompe centrifuge à moteur électrique, et motopompe réalisée selon ce procédé.**

(57)    Procédé de réalisation d'une pompe centrifuge à roue à ailettes et à moteur électrique à rotor à aimant permanent, caractérisé en ce qu'il comprend au moins des phases suivantes :
- un choix d'un aimant permanent ayant une forme tubulaire (21), et
- un surmoulage d'un matériau mécaniquement rigide moulable ou injectable, sur cet aimant permanent tubulaire (21) et suivant l'axe de rotation (32) de ce dernier pour réaliser une pièce composite monobloc (17) comportant un rotor à aimant permanent (18), un arbre (27) de ce rotor ayant à une première extrémité, une première portée de palier de rotor (36) et à une deuxième extrémité une deuxième portée de palier de rotor (37) et des moyens de maintien et d'entraînement (38, 39, 40) de la roue à ailettes (15).

EP 0 438 334 A1

Jouve, 18, rue Saint-Denis, 75001 PARIS

FIG_1

# PROCEDE DE REALISATION D'UNE POMPE CENTRIFUGE A MOTEUR ELECTRIQUE, ET MOTOPOMPE REALISEE SELON CE PROCEDE

La présente invention concerne un procédé de réalisation d'une pompe centrifuge à moteur électrique, et pompe réalisée selon ce procédé.

Une pompe centrifuge à moteur électrique comprend habituellement dans sa partie "pompe" une roue à ailettes tournant à l'intérieur d'une chambre de pompe qui a la forme d'une volute, pour aspirer un liquide à une entrée axiale et le refouler radialement à une sortie latérale, et dans sa partie "moyen d'entraînement" un moteur électrique dont un bout de l'arbre est rendu solidaire de cette roue a ailettes pour l'entraîner en rotation durant un fonctionnement de cette pompe.

Une telle pompe est souvent utilisée pour transférer un liquide, vidanger ou alimenter un réservoir, une machine ou un système comportant un circuit à liquide. Cette pompe est fréquemment retrouvée dans un lave-linge ou lave-vaisselle comme une pompe de vidange de cuve.

Dans certaines pompes centrifuges à moteur électrique connues, la chambre qui abrite leur rotor est en libre communication avec leur chambre de pompe.

Des impuretés en suspension dans le liquide véhiculé dans leur chambre de pompe peuvent entrer librement dans leur chambre à rotor et s'y déposer ou venir en contact avec leur rotor et le gêner voire le bloquer dans son mouvement.

D'autres pompes centrifuges à moteur électrique connues comprennent une roue de pompe montée sur une extrémité d'un arbre de leur moteur électrique d'entraînement, libre en rotation sur un angle prédéterminé autour de cet arbre. En effet, cette roue de pompe comprend en général dans un trou axial de son moyeu, une butée d'entraînement occupant un secteur circulaire de ce trou, tandis que l'extrémité de l'arbre du moteur sur laquelle est montée cette roue de pompe, porte un doigt axial qui tourne librement dans ce trou axial et ne commence à entraîner en rotation cette roue que lorsque ce doigt rencontre cette butée d'entraînement dans le moyeu de cette roue.

Ces pompes connues comportent plusieurs pièces distinctes qui doivent être usinées et assemblées à savoir un arbre de moteur électrique soigneusement usiné, un rotor à aimant permanent à dimensions correctement exécutées, destiné à être monté sur cet arbre, un doigt axial prêt à être fixé sur une extrémité de cet arbre. En général, ces pièces sont onéreuses en fabrication et en assemblage.

La présente invention, visant à éviter les inconvénients des motopompes connues ci- dessus, a pour objet un procédé économique de réalisation d'une pompe centrifuge à moteur électrique, efficace en fonctionnement.

L'invention a également pour objet une motopompe réalisée selon ce procédé dans laquelle des désalignements des paliers sont automatiquement corrigés.

Selon l'invention, un procédé de réalisation d'une pompe centrifuge à roue à ailettes et à moteur électrique à rotor à aimant permanent, est caractérisé en ce qu'il comprend au moins des phases suivantes :
- un choix d'un aimant permanent ayant une forme tubulaire,et
- un surmoulage d'un matériau mécaniquement rigide moulable ou injectable, sur cet aimant permanent tubulaire et suivant l'axe de rotation de ce dernier, pour réaliser une pièce composite monobloc comportant un rotor à aimant permanent, un arbre de ce rotor ayant à une première extrémité, une première portée de palier de rotor, et à une deuxième extrémité, une deuxième portée de palier de rotor (37) et des moyens de maintien et d'entraînement de la roue à ailettes.

Pour mieux faire comprendre l'invention, on décrit ci-après un exemple de réalisation illustré par des dessins ci-annexés dont :
- la figure 1 représente une vue schématique et partielle d'une pompe centrifuge à moteur électrique en coupe suivant un plan vertical, et
- la figure 2 représente une vue schématique en coupe longitudinale d'une pièce composite monobloc de la pompe de la figure 1.

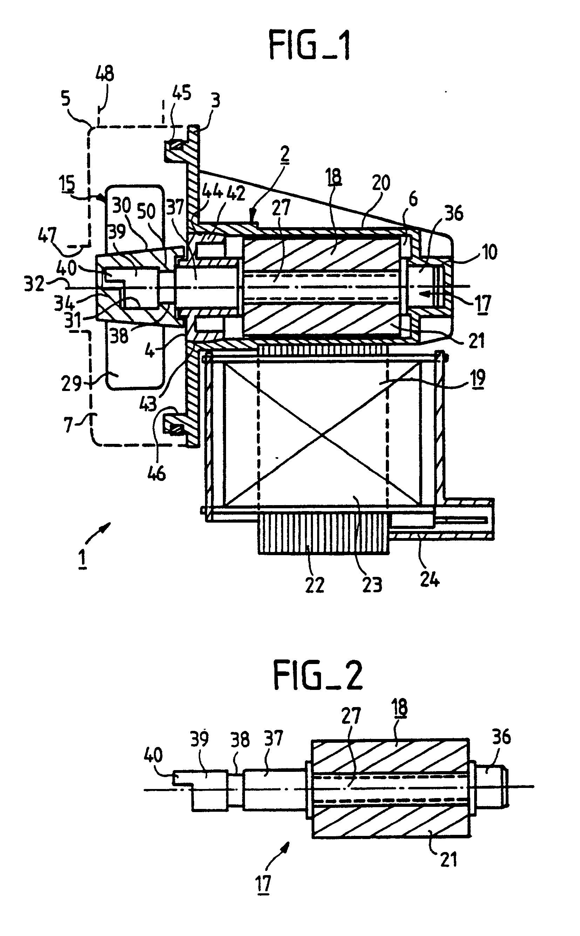

Une pompe centrifuge à moteur électrique 1 illustré dans la figure 1 comprend un corps rigide en un matériau amagnétique 2 pourvu d'une platine de pompe 3 et d'une chambre à rotor 6. La chambre à rotor 6, faisant saillie perpendiculairement sur une première face de cette platine, est ouverte à une des extrémités à travers une ouverture mitoyenne 4 avec une chambre de pompe 7 délimitée par un carter de pompe 5 monté sur une deuxième face de cette platine. Cette chambre à rotor 6 est fermée, à son autre extrémité, par une paroi formant un trou axial borgne 10, concentrique à cette chambre à rotor 6 et destiné à réaliser un premier des paliers d'un moteur électrique d'entraînement.

La chambre de pompe 7 ayant la forme d'une volute reçoit une roue de pompe à ailettes 15 et la chambre à rotor 6 abrite un rotor 18 d'un moteur électrique 19 qui entraîne en rotation la roue à ailettes 15. Le moteur électrique 19 est un moteur du type synchrone à aimant permanent.

Le corps amagnétique 2 supporte serrées sur la surface extérieure cylindrique 20 de la paroi de la chambre à rotor 6, les deux extrémités ou pôles d'un stator 22 constitué par un paquet de tôles magnétiques en forme d'un U sur lequel est montée une bobine électrique de stator 23.

Un capot 24 protègeant cette bobine électrique 23 est fixé sur le corps 2 par des moyens de fixation connus non représentés.

La roue de pompe 15 qui est entraînée en rotation par un arbre 27 du rotor 18 comprend des ailettes 29 et un moyeu 30 muni d'un trou axial borgne 31 concentrique à l'axe de rotation 32 de cette roue et pourvu dans son fond d'une butée d'entraînement 34.

L'arbre 27 du rotor 18 comprend à une première de ses extrémités, une première portée de palier de rotor 36 montée tournant librement dans un palier formée dans le trou borgne 10 de la chambre à rotor 6, et à une deuxième de ses extrémités successivement de l'intérieur vers l'extérieur, une deuxième portée de palier de rotor 37, une gorge de retenue 38 de la roue à ailettes, une portée d'axe de maintien 39 de cette roue de pompe et un doigt terminal axial d'entraînement 40 qui coopère avec la butée d'entraînement 34 dans le trou axial borgne 31 du moyeu 30 de la roue à ailettes 15. La roue à ailettes 15 n'est entraînée en rotation par l'arbre 27 du rotor 18 que quand le doigt axial 40 rencontre sur son trajet la butée d'entraînement 34 du moyeu 30 de cette roue.

La butée d'entraînement 34 dans le moyeu 30 de la roue à ailettes 15 et le doigt axial 40 de l'arbre 27 du rotor 18 comprennent une section transversale qui a une forme choisie parmi un secteur circulaire, un segment circulaire, un demi-cercle, un secteur d'une couronne ou une autre forme permettant leur coopération dans l'entraînement de la roue de pompe 15.

Dans une variante de réalisation, le moyeu 30 de la roue à ailettes 15 peut comprendre dans le fond de son trou axial borgne 31, deux butées 34 diamétralement opposées séparées par une large fente centrale non représentées. Dans cette variante de réalisation le doigt axial 40 de l'arbre du rotor, associé à ces deux butées 34 est un doigt axial diamétral plat non représenté.

Selon l'invention, un procédé de réalisation de la pompe centrifuge à moteur électrique 1 comprend au moins des phases suivantes :

- un choix d'un aimant permanent ayant une forme tubulaire 21, et

- un surmoulage d'un matériau mécaniquement rigide moulable ou injectable, sur cet aimant permanent tubulaire 21 et suivant l'axe de rotation 32 de ce dernier pour réaliser une pièce composite monobloc 17 comportant un rotor à aimant permanent 18, un arbre 27 de ce rotor ayant à une première extrémité, une première portée de palier de rotor 36, et à une deuxième extrémité, une deuxième portée de palier de rotor 37 et des moyens de maintien et d'entraînement de la roue à ailettes 15, tels qu'une gorge de retenue 38, une portée d'axe de maintien 39 et un doigt terminal axial d'entraînement 40.

Ce procédé permet ainsi une simplification de la fabrication du rotor 18 de l'arbre 27 et des moyens de maintien et d'entraînement de la roue à ailettes 15, et une suppression avantageuse d'un grand nombre d'opérations d'usinage et de la totalité des opérations de montage ou d'assemblage de ces pièces.

Selon ce procédé, le matériau moulable ou injectable choisi pour le surmoulage de la pièce composite monobloc 17 est soit un métal amagnétique, soit une matière synthétique.

Dans la pompe centrifuge à moteur électrique 1, le rotor 18 tourne à l'intérieur d'une chambre à rotor 6. Le rotor 18 est supporté en rotation au niveau de la première portée de palier 36 de son arbre 27, par un premier palier formé dans le trou borgne 10 de la chambre à rotor 6, et au niveau de la deuxième portée de palier 37 de son arbre 27, par un deuxième palier maintenu par un support 42.

Le support 42 du deuxième palier de l'arbre 27 du rotor 18 forme également une cloison de séparation étanche au liquide entre la chambre à rotor 6 et la chambre de pompe 7. Des impuretés en suspension dans un liquide véhiculé par la roue à ailettes 15 dans la chambre de pompe 7 ne peuvent pas ainsi pénétrer dans la chambre à rotor 6 et gêner ou perturber le fonctionnement du rotor 18.

Dans le cas où l'on veut obtenir une correction automatique d'un désalignement des paliers du rotor 18, le support 42 du deuxième palier de l'arbre 27 du rotor 18 est rendu pivotant au niveau de ses surfaces de contact d'assemblage avec la paroi interne de la chambre à rotor 6 et du bord de l'ouverture mitoyenne 4.

Dans l'exemple illustré le support pivotant 42 comprend dans sa périphérie, comme surfaces de contact d'assemblage avec les parois internes du bord de l'ouverture mitoyenne 4 et de la chambre à rotor 6, une surface convexe sphérique 43 et les parois internes de la chambre à rotor 6 et du bord de l'ouverture mitoyenne 4 comportent comme surfaces de contact d'assemblage avec le support 42, une surface concave sphérique commune 44, complémentaire à cette surface sphérique 43 de ce support 42.

Dans un montage du support 42 dans les parois internes du bord de l'ouverture mitoyenne 4 et de la chambre à rotor 6, le procédé selon l'invention utilise l'élasticité de la matière constituant ce support 42 et les parois du bord de l'ouverture mitoyenne 4 et de la chambre à rotor 6, et fait rentrer de force la surface convexe sphérique 43 du support 42 dans la surface concave sphérique commune 44 du bord de l'ouverture mitoyenne 4 et de la paroi de la chambre à rotor 6 et les retenir assemblées par leur emboîtement sans autre moyen de maintien.

Grâce à une bonne aptitude au pivotement du support 42 du deuxième palier de l'arbre 27 du rotor 18, des désalignements des paliers de ce rotor sont automatiquement corrigés.

Dans la pompe centrifuge à moteur électrique 1, le corps 2 est pourvu d'une platine de pompe 3 dont une première face porte une chambre à rotor 6 et une deuxième face munie d'un rebord 46 autour duquel sont montés un carter de pompe 5 et un joint de révolution d'étanchéité d'assemblage 45.

Selon le procédé de l'invention, une pièce monobloc illustrée dans la figure 1 comportant ce corps et ce joint de révolution d'étanchéité 45 est réalisée par un moulage bicomposant. Le joint 45 fait ainsi partie intégrante du corps 2 et ne se perd pas par un détachement accidentel ou involontaire.

Lors d'une mise sous tension de la bobine électrique 23 du stator 22, le rotor 18 oscille autour d'une position d'équilibre avant qu'il ne tourne d'une manière uniforme et que le doigt terminal axial 40 de l'arbre 27 du rotor ne rencontre la butée d'entraînement 34, et n'entraîne dans son mouvement la rotation de roue à ailettes 15 qui aspire du liquide à travers une entrée axiale 47 dans la chambre de pompe 7 et le refoule à une sortie latérale 48. Des impuretés en suspension dans le liquide aspiré et refoulé ne peuvent pas pénétrer dans la chambre à rotor 6 et perturber le mouvement du rotor 18 grâce à la présence du support étanche de palier 42.

Le moyeu 30 de la roue à ailettes 15 coïffant l'extrémité de l'arbre du rotor 18 est pourvu sur la surface interne de son trou axial borgne 31 d'une nervure annulaire 50. Lors d'un montage du moyeu 30 de la roue à ailettes 15 sur l'extrémité de l'arbre 27 du rotor 18, cette nervure annulaire 50 vient pénétrer dans la rainure de retenue 38 de l'arbre 27 du rotor 18, serre contre celle-ci et assure à la fois une rétention de la roue 15 sur cet arbre 27 du rotor et une étanchéité d'assemblage évitant efficacement toute fuite de graisse ou liquide amortisseur introduit dans le trou axial 31, entre le doigt axial 40 de l'arbre 27 du rotor 18 et la butée d'entraînement 34 de la roue à ailettes 15.

## Revendications

1. Procédé de réalisation d'une pompe centrifuge à roue à ailettes et à moteur électrique à rotor à aimant permanent, caractérisé en ce qu'il comprend au moins des phases suivantes :
   - un choix d'un aimant permanent ayant une forme tubulaire (21), et
   - un surmoulage d'un matériau mécaniquement rigide moulable ou injectable, sur cet aimant permanent tubulaire (21) et suivant l'axe de rotation (32) de ce dernier pour réaliser une pièce composite monobloc (17) comportant un rotor à aimant permanent (18), un arbre (27) de ce rotor ayant à une première extrémité, une première portée de palier de rotor (36) et à une deuxième extrémité une deuxième portée de palier de rotor (37) et des moyens de maintien et d'entraînement (38, 39, 40) de la roue à ailettes (15).

2. Procédé selon la revendication 1, caractérisé en ce qu'il consiste à réaliser dans la pièce composite monobloc (17) issue du surmoulage, des moyens de maintien et d'entraînement de la roue à ailettes (15) par une formation sur la deuxième extrémité de l'arbre (27) du rotor (18) d'une gorge de retenue (38) d'une portée d'axe de maintien (39) et d'un doigt terminal axial d'entraînement (40).

3. Procédé selon l'une des revendications 1 et 2, caractérisé en ce qu'il consiste dans une sélection d'un matériau moulable ou injectable pour le surmoulage de la pièce composite monobloc (17), à choisir un métal amagnétique ou une matière synthétique.

4. Procédé selon l'une des revendications 1 à 3, de réalisation d'une pompe centrifuge à moteur électrique (1) ayant un rotor (18) maintenu par deux paliers, une chambre à rotor (6) et une chambre de pompe (7), la chambre à rotor (6) étant séparée de la chambre de pompe (7) au niveau de leur ouverture mitoyenne (4) et de cette chambre à rotor (6), caractérisé en ce qu'il consiste dans une obtention d'une correction automatique des désalignements des paliers de ce rotor (18), à rendre pivotant le support (42) de l'un des paliers de ce rotor, au niveau de ses surfaces de contact d'assemblage avec des parois internes de cette chambre à rotor (6) et du bord de cette ouverture mitoyenne (4).

5. Procédé selon la revendication 4, caractérisé en ce qu'il consiste dans une réalisation d'un pivotement du support (42) de l'un des paliers du rotor (18) au niveau de ses surfaces de contact d'assemblage avec des parois internes du bord de l'ouverture mitoyenne (4) et de la chambre à rotor (6), à donner à ce support (42) comme surfaces de contact d'assemblage, une surface convexe sphérique (43) et aux parois internes de la chambre à rotor (6) et du bord de l'ouverture mitoyenne (4) comme surfaces de contact d'assemblage, une surface concave sphérique commune (44) complémentaire à cette surface convexe sphérique (43) de ce support (42).

6. Procédé selon la revendication 5, caractérisé en ce qu'il consiste dans un montage du support (42) de l'un des paliers du rotor (18) dans les parois internes de la chambre à rotor (6) et du bord de l'ouverture mitoyenne (4) à utiliser l'élasticité de la matière constituant le support (42) et les parois du bord de l'ouverture mitoyenne (4) et de la chambre à rotor (6) à faire rentrer de force la surface convexe sphérique (43) de ce support (42) dans la surface concave sphérique commune (44) des parois du bord de l'ouverture mitoyenne (4) et de la chambre à rotor (6) et à les retenir assemblées par leur emboîtement sans autre moyen de maintien.

7. Procédé selon l'une des revendications 1 à 6, de réalisation d'une pompe centrifuge à moteur électrique (1) ayant un corps (2) pourvu d'une platine de pompe (3) dont une première face porte une chambre à rotor (6) et une deuxième face munie d'un rebord (46) autour duquel sont montés un carter de pompe (5) et un joint de révolution d'étanchéité d'assemblage (45) de ce carter (5), caractérisé en ce qu'il consiste à réaliser par un moulage bicomposant, une pièce monobloc comportant ce corps (2) et ce joint de révolution (45).

8. Motopompe centrifuge réalisée selon le procédé de l'une des revendications 1 à 7, caractérisé en ce qu'il comprend un corps rigide en un matériau amagnétique (2) pourvue d'une platine de pompe (3) et d'une chambre à rotor (6) qui, faisant saillie perpendiculairement sur une première face de cette platine, est ouverte à une des extrémités, à travers une ouverture mitoyenne (4) avec une chambre de pompe (7) délimitée par un carter de pompe (5) monté sur une deuxième face de cette platine et qui est fermée à son autre extrémité par une paroi formant un trou axial borgne (10), concentrique à cette chambre à rotor (6) et destinée à réaliser un premier des palier d'un rotor (18), un deuxième palier de ce rotor (18) étant porté par un support (42) monté pivotant dans des parois internes de la chambre à rotor (6) et du bord de l'ouverture mitoyenne (4) entre la chambre à rotor (6) et la chambre de pompe (7).

# FIG_1

# FIG_2

Office européen
des brevets

**RAPPORT DE RECHERCHE EUROPEENNE**

Numero de la demande

EP 91 40 0058

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 287 984 (ASKOLL)<br>* Colonne 1, lignes 1-3; colonne 2, ligne 24 - colonne 4, ligne 8; figures * | 1,3,4,8 | H 02 K 1/27<br>H 02 K 5/167<br>F 04 D 13/06<br>F 04 D 29/04 |
| A | --- | 2,6 | |
| Y | DE-U-8 807 108 (SIEMENS)<br>* Page 2, lignes 19-25; page 5, ligne 7 - page 6, ligne 12; figure * | 1,3,4,8 | |
| A | FR-A-2 311 945 (BOSCH)<br>* Page 1, lignes 1-4; page 2, ligne 22 - page 3, ligne 26; figures 1,4 *<br>--- | 4,5 | |
| A | PATENT ABSTRACTS OF JAPAN, vol. 7, no. 165 (M-230)[1310], 20 juillet 1983; & JP-A-58 72 692 (SHIBAURA SEISAKUSHO K.K.) 30-04-1983<br>* Document entier *<br>----- | 1 | |
| | | | **DOMAINES TECHNIQUES RECHERCHES (Int. Cl.5)**<br><br>H 02 K<br>F 04 D |

Le présent rapport a été établi pour toutes les revendications

| Lieu de la recherche | Date d'achèvement de la recherche | Examinateur |
|---|---|---|
| LA HAYE | 28-03-1991 | ZIDI K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)